# FASCICULE DE BREVET EUROPEEN

(11) **EP 3 400 804 B1**
(45) Date de publication et mention de la délivrance du brevet: **27.11.2019**
(21) Numéro de dépôt: 18170002.2
(22) Date de dépôt: 30.04.2018
(51) Int. Cl.: A21D 15/02, B65D 21/02, B65D 21/04, B65D 85/36

(54) **MÉTHODE ET SYSTÈME DE TRANSPORT ET DE POUSSE DE PRODUITS DE PÂTE FRAICHE**
VERFAHREN UND VORRICHTUNG ZUM TRANSPORTIEREN UND GAREN VON TEIG
METHOD AND SYSTEM FOR TRANSPORTING AND RAISING A DOUGH PRODUCT

(30) Priorité: 10.05.2017 LU 100244
(43) Date de publication de la demande: 14.11.2018
(73) Titulaire: Panelux S.A., 6933 Mensdorf (LU)
(72) Inventeur: MULLER, Patrick, L-2342 Luxembourg (LU)
(74) Mandataire: Office Freylinger

(56) Documents cités:
- EP-A1- 2 502 837
- WO-A1-03/086882
- US-A1- 2012 241 350

## Description

### Domaine technique

La présente invention concerne notamment une méthode et/ou un système permettant de pouvoir offrir au client un produit de boulangerie d'une qualité égale à celle d'un artisan boulanger, même dans des points de vente distants, ne disposant pas du savoir-faire d'un tel artisan boulanger.

### Etat de la technique

La fabrication traditionnelle et artisanale de produits boulangers, comme le pain, comprend l'entièreté des étapes, c'est-à-dire la préparation de la pâte à partir de farine, d'eau de levain et éventuellement d'autres ingrédients, le pétrissage de la pâte, la formation de pâtons, la levée (ou pousse) de la pâte pendant une certaine période de temps et finalement la cuisson des pâtons dans un four. Toutes ces étapes sont traditionnellement effectuées consécutivement par l'artisan boulanger dans sa boulangerie. En France, notamment, les dénominations « boulanger » et « boulangerie » sont réservées aux artisans professionnels qui choisissent leurs matières premières, pétrissent la pâte, en contrôlent la fermentation ainsi que la mise en forme et enfin cuisent le pain sur le lieu de vente.

En effet, la fabrication du pain et des produits à base de pâte a fortement évoluée ces dernières décennies. Les dispositifs et procédés industriels ont depuis pris de plus en plus d'importance. Aujourd'hui, à part la production entièrement industrielle jusqu'au pain emballé et l'élaboration artisanale en boulangerie, il existe un autre type de points de vente de pains « frais », à savoir les magasins assurant la cuisson de pâtons levés non-produits sur place, à savoir des pâtons soit crus surgelés, soit précuits surgelés, soit précuits non-surgelés, voire même cuits surgelés.

L'avantage majeur de ce dernier type de production de pain « frais » est que la main d'œuvre effectuant la cuisson n'a pas besoin d'une formation de boulanger, une formation minimale est suffisante. En effet, la cuisson se fait dans des fours plus ou moins automatisés selon des programmes de cuisson prédéfinis. A condition de respecter les consignes de cuisson, les pains ainsi cuits sont donc d'une qualité très constante et contrôlée.

Cependant, l'inconvénient capital de ce type de produits est que les qualités organoleptiques n'atteignent d'une manière générale pas celles d'un produit de boulangerie artisanale. En effet, tant la surgélation que la double cuisson entraînent une perte d'hydratation importante du pain, ce qui résulte en un produit à mie moins savoureuse et à croûte plus épaisse et dure.

Comme la boulangerie artisanale est en régression pour différentes raisons, il reste qu'il serait souhaitable de pouvoir offrir des produits de boulangerie ayant toutes les qualités organoleptiques d'un produit artisanal, mais qui pourraient être fraichement cuits en point de vente sans requérir sur place du matériel d'une boulangerie entière, ni de préférence le savoir-faire d'un bon artisan boulanger.

### Objet de l'invention

Un objet de la présente invention est par conséquent de proposer une méthode et/ou un système permettant de pouvoir offrir au client un produit de boulangerie d'une qualité égale à celle d'un artisan boulanger, même dans des points de vente ne disposant pas du savoir-faire d'un tel artisan boulanger.

### Description générale de l'invention

Afin de résoudre le problème mentionné ci-dessus, la présente invention propose dans un premier aspect, un conditionnement particulier, empilable pour le transport et la pousse de pâtons crus frais (ni surgelés, ni (pré)cuits).

Dans un deuxième aspect, la présente invention propose un système permettant le transport et la pousse de pâtons crus frais comprenant l'utilisation ou la mise en œuvre d'un nombre des conditionnements du premier aspect de l'invention.

L'invention propose aussi, dans un troisième aspect, une méthode de transport et de pousse de pâtons crus frais utilisant ou mettant en œuvre lesdits conditionnements empilables particuliers de l'invention, ainsi que le système de transport et de pousse de pâtons frais.

Un quatrième aspect de l'invention concerne une méthode de fabrication de produits de boulangerie frais de bonne qualité comprenant l'utilisation desdits conditionnements empilables selon l'invention, du système de transport et de pousse de pâtons crus frais et/ou de ladite méthode de transport et de pousse de pâtons frais.

Un cinquième aspect de l'invention concerne l'utilisation de conditionnements empilables ou d'un système de transport et de pousse de pâtons levés frais tels que décrits plus en détail ci-après dans une méthode de transport et de pousse de pâtons crus frais ou de fabrication de produits de boulangerie frais.

Plus spécifiquement, le premier aspect propose un conditionnement empilable de transport et de pousse de pâtons frais, non surgelés et non (pré)cuits, le conditionnement empilable comprenant
- un cadre en matière plastique rigide, le cadre comportant
   ∘ des flancs périphériques, chaque flanc périphérique comprenant une face intérieure, une face extérieure, une face inférieure et une face supérieure, chaque face inférieure, respectivement supérieure étant configurée pour s'assembler à une face supérieure, respectivement inférieure d'un conditionnement de transport empilable identique,
   ∘ au moins deux flancs opposés qui présentent un ou plusieurs passages d'air, la section totale des passages d'air par flanc étant située entre 2 et 12 %, de préférence entre 2,5 et 8 % de la surface extérieure dudit flanc, et
- un support rigide en acier inoxydable agencé à l'intérieur du cadre, le support comprenant aux moins deux bords latéraux opposés repliés, les bords opposés repliés étant maintenus sur des faces intérieures de flancs périphériques opposés du cadre.

Les avantages des conditionnements empilables de l'invention sont multiples et vont être décrits plus amplement ci-dessous.

Premièrement, comme les conditionnements de l'invention sont empilables, ils peuvent être aisément superposés une fois que les pâtons crus frais y sont déposés. La matière plastique du cadre est non seulement solide et capable de supporter des dizaines de conditionnements superposés remplis de pâtons, mais elle est en outre légère et isolante.

Deuxièmement, les passages d'air des conditionnements de l'invention sont en outre dimensionnés pour permettre un échange limité, mais suffisant avec l'extérieur pour pouvoir refroidir les pâtons rapidement de préférence via un système de refroidissement rapide par aspiration forcée d'air froid au travers des passages d'air. Une fois que les pâtons sont déposés dans les conditionnements empilables de l'invention et que les conditionnements sont empilés les uns sur les autres, la pile complète de conditionnements comprenant les pâtons pourra être refroidie par un système d'aspiration d'air froid adjacent à la pile. Une fois refroidis à une température suffisamment basse pour interrompre la pousse (par exemple inférieure à 4°C à cœur) la pile pourra être stockée à température frigo. Si les passages d'air dans les conditionnements sont parfaitement dimensionnés pour permettre le refroidissement rapide par aspiration forcée, les dimensions des passages d'air sont néanmoins telles que même pendant les phases de stockage et de transport pendant lesquelles la température extérieure n'est pas contrôlable (entre l'atelier de préparation des pâtons et le camion ou encore entre le camion et le point de cuisson et de vente par exemple), l'échange d'air est suffisamment limité pour que les pâtons ne soient pas exposés à un courant d'air. Le courant d'air sur des produits crus provoque le « croutage » qui est préjudiciable à la qualité finale du produit. La température de l'air à l'intérieur des conditionnements ne change donc que d'au plus quelques degrés Celsius, sans mettre en péril la pousse ou la qualité des pâtons.

Un troisième avantage résulte de la conception du support rigide monté dans le cadre en matière plastique rigide. Ce support est en acier inoxydable et il ainsi est non seulement durable et facile à nettoyer, mais le plus grand avantage de ce matériau, contrairement aux matières plastiques, est qu'il possède tant une émissivité faible (généralement inférieure à 0,5), qu'une capacité thermique réduite. La combinaison de ces deux propriétés réduisent la formation de la condensation lorsque les pâtons passent du frigo à la température ambiante et ensuite à la température de fermentation et réduisent ainsi le risque que les gouttes d'eau ne s'y forment et tombent sur les pâtons des conditionnements sous-jacents. En effet, ces gouttes d'eau formeraient des taches inesthétiques et indésirables, visibles même après cuisson.

D'autres avantages encore plus marquants seront présentés en relation avec les autres aspects de l'invention développés plus loin.

Le support rigide en acier inoxydable est fixé au cadre rigide en matière plastique par ses bords repliés par tout moyen approprié. De préférence, ceux-ci sont maintenus sur des faces intérieures de flancs périphériques par calage, par encliquetage, par fixation au moyen de colle, de rivets, de vis, de boulons ou toute combinaison de ceux-ci.

La matière plastique constituant le cadre peut en principe être faite de toute matière plastique rigide appropriée dans le domaine alimentaire. De préférence, la matière plastique rigide formant le cadre comprendra des polymères ou copolymères d'éthylène ou de propylène, ou des mélanges de ces matières ou même des composites de différentes matières plastiques ; de manière particulièrement préférée le cadre comprend ou est constitué de polyéthylène haute densité.

La hauteur des flancs périphériques du cadre est fonction de la hauteur du pâton levé du produit de boulangerie envisagé. De manière avantageuse la hauteur des flancs périphérique représente de 1,1 à 5, de préférence 1,2 à 2 fois la hauteur d'un pâton levé correspondant.

Dans les conditionnements empilables de l'invention, le support rigide en acier inoxydable comprend avantageusement des perforations sur au moins une partie de sa surface de manière à permettre le passage de l'air et/ou de l'humidité entre conditionnements de transport superposés.

Selon le produit de boulangerie envisagé, le conditionnement empilable de transport et de pousse peut comprendre des parties embouties ou des ondulations, de préférence des ondulations longitudinales pour des pâtons de pains longs, notamment les baguettes. Les ondulations permettent d'une part de maintenir les pâtons en position et d'autre part elles empêchent que les pâtons ne perdent leur forme en s'aplatissant ou encore que les pâtons adjacents ne fusionnent ensemble. Ceci est particulièrement vrai pour des pâtes fortement hydratées, comme par exemple les baguettes.

Généralement, il est souhaitable d'interposer entre les pâtons et le support un tissu en fibres naturelles, telles que le lin. Ces tissus peuvent être simplement mis sur le support avant d'y poser les pâtons ou ils peuvent être fixables par n'importe quel moyen approprié, par exemple au moyen de boutons pression, de bandes velcro, de clips, etc.

Comme déjà mentionné certaines caractéristiques des conditionnements empilables de transport et de pousse pourront être adaptées en fonction des produits de boulangeries envisagés. De manière générale, le cadre est de forme parallélépipédique. Dans la pratique, sa longueur est souvent comprise entre 30 et 100 cm, sa largeur entre 0,3 à 0,8 fois la longueur et sa hauteur entre 3 et 20 cm. Des dimensions particulièrement avantageuses pour les conditionnements comprennent une longueur de 55 à 65 cm, une largeur de 30 à 45 cm et une hauteur entre 4 et 10 cm.

Le deuxième aspect de l'invention concerne un système permettant d'effectuer le transport de l'atelier de préparation des pâtons vers le point de cuisson et de vente ainsi que la pousse des pâtons. Par conséquent, un tel système comprend une pluralité de conditionnements empilables tels que décrits ci-dessus. Les dimensions en longueur et en largeur de ces conditionnements sont alors de préférence identiques ou en variante ces dimensions sont telles que la longueur d'un conditionnement de taille inférieure correspond à la largeur d'un conditionnement de taille plus grande et sa largeur est approximativement la moitié de la longueur du conditionnement plus grand. Sur un conditionnement de grande taille, il est par conséquent possible de poser côte à côte deux conditionnements plus petits et sur ceux-ci soit de nouveau deux petits, soit un grand, etc. Il est ainsi possible d'empiler deux tailles de conditionnement de façon variable et flexible.

De préférence, les conditionnements sont empilés pour le transport sur une hauteur variable selon les besoins, par exemple la quantité requise pour un certain point de cuisson et de vente, mais en général la hauteur empilée maximale correspond à une hauteur à laquelle le conditionnement supérieur est facilement accessible aux personnes qui les manipulent, par exemple au maximum environ 2 mètres. De façon à pouvoir fermer le conditionnement supérieur, il est de préférence prévu un couvercle ayant les dimensions en longueur et en largeur correspondants à la largeur et la longueur des conditionnements empilables. Selon les besoins, les hauteurs de la pluralité de conditionnements empilables seront identiques (par exemple pour un seul type de pâtons) ou différentes (par exemple pour des pâtons pour différents produits de boulangerie).

Pour le transport, une pile de conditionnements de transport et de pousse est de préférence déplacée sur un chariot roulant dont la taille correspond à celui des conditionnements choisis. Dans la pratique, ces chariots roulants sont remplis au fur et à mesure par empilement des conditionnements contentant les pâtons.

Contrairement à certains systèmes connus du moins pour le transport de pâtons précuits, le chariot roulant ne nécessite pas un ensemble d'étagères où sont glissés les conditionnements. En effet, ces systèmes ne sont pas flexibles en ce qui concerne la hauteur des conditionnements utilisables : soit la hauteur est suffisante pour offrir une certaine variabilité, alors on observe éventuellement une importante perte d'espace si on n'utilise que des conditionnements de hauteur plus faible ; soit la hauteur est plus réduite, alors certaines hauteurs ne pourront pas être transportées avec ce chariot roulant. Il existe également des chariots roulants qui au lieu d'avoir des étagères complètes possèdent uniquement des appuis latéraux espacés sur lesquels sont posés les conditionnements de transport connus, souvent des plaques éventuellement munies de petits rebords latéraux pour plus de rigidité. L'une et l'autre de ces solutions connues ont cependant les mêmes désavantages et ne seraient donc pas utilisables pour la pousse et le transport de pâtons : d'une part leur construction rajoute inutilement du poids à l'ensemble et d'autre part il serait alors absolument indispensable de prévoir un moyen de fermer le chariot chargé de tous les côtés de manière à éviter de trop fortes variations de températures à l'intérieur.

Dans un troisième aspect, l'invention concerne une méthode de transport et de pousse de pâtons frais, comprenant les étapes suivantes :
(a) pétrissage d'une pâte pour produits de boulangerie et formation de pâtons crus frais, les pâtons peuvent être optionnellement scarifiés avant d'être déposés (face scarifiée vers le bas) sur les supports rigides,
(b) dépôt des pâtons crus frais sur les supports rigides de conditionnements empilables selon l'invention,
(c) empilement des conditionnements empilables contenant les pâtons crus frais pour former une pile de conditionnements, de préférence sur un chariot roulant dont la largeur et la longueur sont adaptées à la largeur et la longueur des conditionnements empilables,
(d) refroidissement de la pile de conditionnements avec les pâtons crus frais à une température de conservation appropriée pour interrompre l'activité de fermentation et stockage (ou maintien) à cette température de conservation,
(e) chargement et transport de la pile de conditionnements avec les pâtons crus frais à la température de conservation vers le point de cuisson et de vente, et
(f) déchargement de la pile de conditionnements avec les pâtons crus frais au point de cuisson et de vente et le cas échéant suite du stockage (ou maintien) à la température de conservation.

Les étapes (a) à (d) sont réalisées dans un l'atelier de préparation des pâtons produisant ce type de pâtons pour une pluralité de points de cuisson et de vente distants de l'atelier. L'étape (a) est connue en soi et est variable selon le type de produit de boulangerie souhaité. Le pétrissage se fait directement à partir de farines sélectionnées, d'eau, de levain et d'autres ingrédients usuels. La pâte résultante bénéficie ou non d'un temps de pointage en cuve, puis est façonnée et portionnée en pâtons de taille appropriée. Ces pâtons crus frais sont ensuite déposés à l'étape (b) sur un premier support rigide d'un conditionnement empilable de la présente invention, éventuellement par l'entremise d'un tissu, par exemple de lin. A l'étape (c), le premier conditionnement rempli est alors posé, de préférence sur un chariot roulant. Un deuxième conditionnement de hauteur identique ou différente est rempli de pâtons identiques ou différents selon les besoins, puis il est placé sur le premier conditionnement. On procède de manière semblable avec les conditionnements suivants en formant ainsi une pile de conditionnements. Sur le dernier conditionnement de la pile, on pose de préférence un couvercle approprié pour protéger le conditionnement supérieur.

Cette pile de conditionnements comprenant les pâtons crus frais est ensuite placée dans un zone de refroidissement rapide à une température et pendant une durée appropriée pour interrompre la pousse des pâtons crus frais (étape (d)). Bien que cette température dite de conservation puisse varier en fonction du type de produit, elle se situe néanmoins en général entre 2 et 10 °C, de préférence entre 3 et 7 °C.

Après une période variable en fonction des besoins des points de cuisson et de vente, les piles de conditionnements sont chargées par un camion climatisé de manière à garantir le maintien de la température de conservation tout le long du trajet vers les points de cuisson et de vente (étape (e)). Au lieu du point de cuisson et de vente, la ou les piles commandées sont déchargées et placées de nouveau à la température de conservation (étape (f)) jusqu'au moment de la préparation pour la cuisson.

Comme les pâtons n'ont pas besoin d'être manipulés individuellement et ne seront pas manipulés individuellement depuis leur introduction dans leur conditionnement à l'étape (b) jusqu'à y compris l'étape (f), il devient possible en respectant les températures de de conservation à l'étape (d) et la température de conservation aux étapes (e) à (f) d'allonger la période de conservation des pâtons levés frais jusqu'à 48 heures, voire plus, sans détérioration des caractéristiques organoleptiques des pâtons ou du pain résultant, même si la température de conservation n'est pas entièrement respectée pendant les courtes phases de chargement à l'atelier et de déchargement au point de cuisson et de vente. En effet, le changement de température de l'air à l'intérieur des conditionnements empilables est limité d'une part par l'échange d'air contrôlé entre l'intérieur et l'extérieur par les passages d'air spécialement dimensionnés selon l'invention, ainsi que par les propriétés isolantes du cadre en matière plastique rigide. De plus le support en acier inoxydable empêche largement la formation de gouttes d'eau par condensation qui pourraient détériorer les pâtons levés frais.

Le quatrième aspect de l'invention concerne une méthode de fabrication de produits de boulangerie frais comprenant l'utilisation ou la mise en œuvre desdits conditionnements empilables selon l'invention, le système de transport et de pousse de pâtons crus frais et/ou ladite méthode de transport et de pousse de pâtons crus frais.

En particulier, l'invention concerne une méthode de fabrication de produits de boulangerie frais comprenant les étapes de la méthode de transport et de pousse de pâtons crus frais décrite ci-dessus. Lors de la dernière étape de fabrication, les piles sont sorties de du frigo (température de conservation), ils restent de préférence un certain temps à température ambiante et sont alors éventuellement (ou non) mis dans une chambre de pousse (à une température de pousse supérieure à la température ambiante). Le temps de pousse est variable selon les produits et en fonction de la température. Ce n'est qu'une fois que les pâtons sont levées et prêts à être enfournés que l'on procède à la dernière étape : soit on pose une plaque de cuisson de taille identique à un conditionnement empilable de l'invention sur celui-ci et on retourne les deux en un seul geste. Les produits de boulangerie se retrouvent alors à l'envers sur la plaque de cuisson et ils peuvent être immédiatement scarifiés (si cela n'a pas été préalablement fait au point a) et enfournés. Une deuxième méthode pour sortir les pâtons levés de l'invention est de détacher la couche en lin d'un côté latéral et ensuite (à l'aide d'une planche à couches de boulangerie) à faire passer chaque pâton individuellement de la couche à la planche et de la planche au tapis d'enfournement du four. La première méthode sera en général utilisée pour des fours ventilés à grilles de cuisson, alors que la deuxième méthode sera de préférence utilisée pour les fours à sols classiques.

L'invention concerne également l'utilisation de conditionnements empilables ou d'un système de transport et de pousse de pâtons levés frais selon l'invention dans une méthode de transport et de pousse de pâtons crus frais ou de fabrication de produits de boulangerie frais.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1: est une coupe transversale à travers un mode de réalisation de deux conditionnements empilables superposés selon l'invention, les deux coupes à gauche et à droite de la ligne A-A' étant faites à deux endroits différents de la longueur du conditionnement empilable ;
Fig. 2: est une coupe longitudinale (partielle) du cadre d'un mode de réalisation d'un conditionnement empilable selon l'invention ;
Fig. 3: est une vue de trois quarts du dessus d'un mode de réalisation d'un conditionnement empilable selon l'invention ;
Fig.4: est une vue de trois quarts du dessous du mode de réalisation d'un conditionnement empilable de la Fig. 3 ; et
Fig. 5: est une vue de trois quarts du dessus d'un mode de réalisation d'une pile de conditionnements empilables posée sur un chariot roulant et surmontée d'un couvercle.

### Description d'une exécution préférée

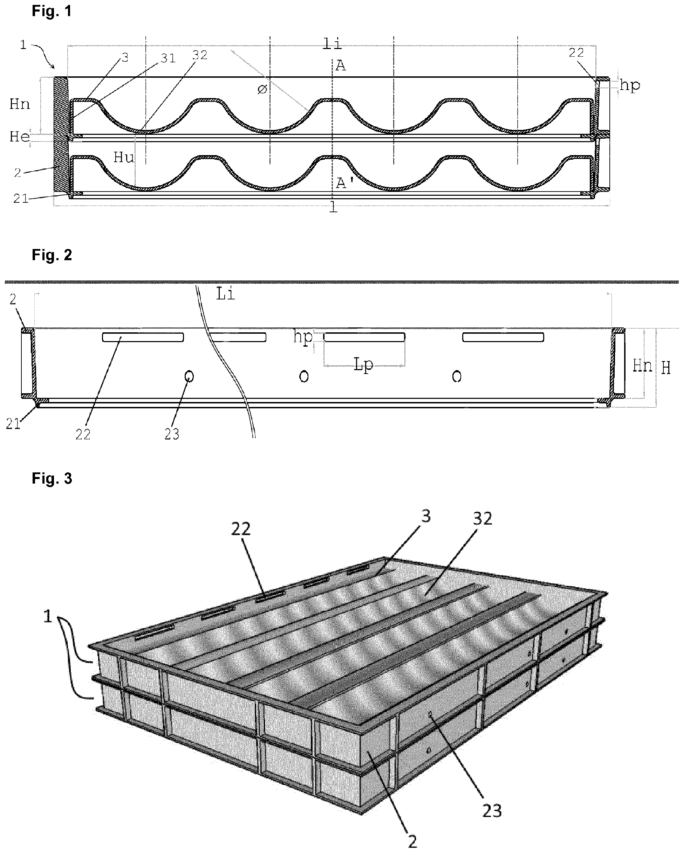

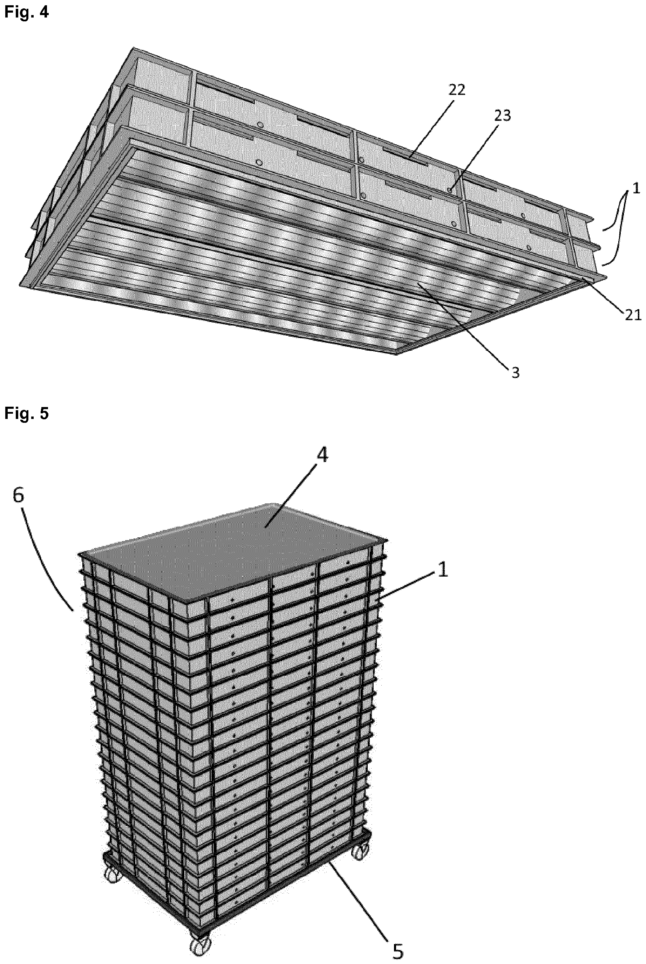

Un exemple de conditionnements empilables 1 est montré aux Fig. 1, 3 et 4 montrant deux conditionnements 1 empilés (superposés). Le conditionnement empilable 1 comprend un cadre 2 (donc sans fond) en matière plastique rigide d'une largeur (extérieure) l et d'une largeur interne li, par exemple du polyéthylène haute densité, formé de flancs périphériques et d'un rebord d'empilement 21 servant à aligner et à maintenir le conditionnement empilable 1 lorsqu'il est posé sur un autre. Ce rebord d'empilement 21 peut être réalisé sous d'autres formes appropriées, par exemple sous forme de tenons et mortaises ou même une combinaison de différents types de rebords. Dû à la hauteur He du rebord d'empilement 21, la hauteur totale H du conditionnement seul est plus grande que sa hauteur nette Hn. En fait, la hauteur totale H = Hn + He. Une pile de 10 conditionnements empilés aura donc une hauteur approximative de 10*Hn + 1*He. S'y ajoutent le cas échéant la hauteur d'un chariot roulant 5 et/ou celle d'un couvercle 4 (voir aussi Fig. 5). Lorsqu'on superpose deux conditionnements la hauteur utile Hu entre ces deux conditionnements est inférieur à Hn, dû notamment à l'épaisseur du support 3.

A l'intérieur du cadre 2 est fixé un support rigide 3 en acier inoxydable qui peut être plat ou muni de parties embouties ou, comme montré aux Fig. 1, 3 et 4, d'ondulations 32 particulièrement adaptées pour y déposer des pâtons de pains longs, comme les baguettes. Dans l'exemple montré, le diamètre ø d'une ondulation peut par exemple valoir entre 50 et 100 mm, pour les baguettes une valeur d'environ 65 à 75 mm convient particulièrement bien.

La partie droite de la coupe de la Fig. 1 montre un passage d'air 22 avec une hauteur de passage d'air hp et une longueur de passage d'air Lp comme montré à la Fig. 2.

La Fig. 2 montre une coupe longitudinale (partielle) à travers un cadre 2 d'un mode de réalisation d'un conditionnement empilable selon l'invention. En effet le support 3 n'a pas été représenté pour pouvoir montrer toutes les caractéristiques du mode de réalisation. Le cadre 2 comprend un rebord d'empilement 21 et des passages d'air 22 de hauteur hp et de longueur Lp. La taille et le nombre de passages d'air 22 placés de préférence dans la partie haute du flanc du cadre 2 sont choisis de manière que la section totale des passages d'air par flanc est située entre 2 et 12 %, de préférence entre 2,5 et 8 % de la surface extérieure dudit flanc.

Dans les variantes illustrées aux Fig. 2, 3 et 4, des trous 23 de fixation du support sont prévus pour attacher le support au cadre par exemple au moyen de rivets, de vis ou de boulons (non représentés).

La Fig. 5 illustre une pile 6 de conditionnements empilables 1 de hauteurs identiques, empilés sur un chariot roulant 5. Afin de protéger les pâtons contenus dans le conditionnement empilable supérieur, celui-ci est fermé par exemple au moyen d'un couvercle 4 plat ou légèrement convexe, de préférence en matière plastique rigide, éventuellement isolé davantage si nécessaire ou souhaité.

Bien que cela ne soit généralement pas nécessaire, on peut prévoir des moyens supplémentaires pour solidariser les conditionnements entre eux et de préférence le couvercle ou même encore le chariot, soit en prévoyant des loquets, des sangles, etc.

### Légende:

- **1**: Conditionnement empilable
- **2**: Cadre
- **21**: Rebord d'empilement
- **22**: Passages d'air
- **23**: Trou de fixation du support
- **3**: Support
- **31**: Bord replié
- **32**: Ondulation
- **4**: Couvercle
- **5**: Chariot roulant
- **6**: Pile de conditionnements
- **L**: Longueur (extérieure) du conditionnement
- **Li**: Longueur intérieure du conditionnement
- **l**: Largeur (extérieure) du conditionnement
- **li**: Largeur intérieure du conditionnement
- **H**: Hauteur du conditionnement
- **Hn**: Hauteur nette
- **He**: Hauteur d'empilement
- **Hu**: Hauteur utile
- **ø**: Diamètre des ondulations
- **Lp**: Longueur d'un passage d'air
- **hp**: Hauteur d'un passage d'air

## Revendications

1. Conditionnement empilable (1) de transport et de pousse de pâtons levés crus frais, ni surgelés, ni (pré)cuits, comprenant
• un cadre (2) en matière plastique rigide, le cadre comportant
∘ des flancs périphériques, chaque flanc périphérique comprenant une face intérieure, une face extérieure, une face inférieure et une face supérieure, chaque face inférieure, respectivement supérieure étant configurée pour s'assembler à une face supérieure, respectivement inférieure d'un conditionnement de transport empilable identique,
∘ au moins deux flancs opposés qui présentent un ou plusieurs passages d'air (22), la section totale des passages d'air par flanc étant située entre 2 et 12 %, de préférence entre 2,5 et 8 % de la surface extérieure dudit flanc, et
• un support (3) rigide en acier inoxydable agencé à l'intérieur du cadre, le support comprenant aux moins deux bords latéraux opposés repliés (31), les bords opposés repliés étant maintenus sur des faces intérieures de flancs périphériques opposés du cadre (2).

2. Conditionnement empilable (1) de transport et de pousse de pâtons levés frais selon la revendication 1, dans lequel les bords repliés (31) du support (3) sont maintenus par calage, par encliquetage, par fixation au moyen de colle, de rivets, de vis, de boulons ou une combinaison de ceux-ci sur des faces intérieures de flancs périphériques.

3. Conditionnement empilable (1) de transport et de pousse de pâtons levés frais selon la revendication 1 ou 2, dans lequel la matière plastique rigide formant le cadre comprend des polymères ou copolymères d'éthylène ou de propylène, de préférence du polyéthylène haute densité.

4. Conditionnement empilable (1) de transport et de pousse de pâtons levés frais selon l'une quelconque des revendications précédentes, dans lequel la hauteur H ou Hn des flancs périphériques du cadre représente de 1,1 à 5, de préférence 1,2 à 2 fois la hauteur d'un pâton levé correspondant.

5. Conditionnement empilable (1) de transport et de pousse de pâtons levés frais selon l'une quelconque des revendications précédentes, dans lequel le support rigide en acier inoxydable comprend des perforations de manière à permettre le passage de l'air et/ou de l'humidité entre conditionnements empilables (1) superposés.

6. Conditionnement empilable (1) de transport et de pousse de pâtons levés frais selon l'une quelconque des revendications précédentes, dans lequel le support comprend des parties embouties ou des ondulations (32), de préférence des ondulations (32) longitudinales pour des pâtons de pains longs, comme les baguettes.

7. Conditionnement empilable (1) de transport et de pousse de pâtons levés frais selon l'une quelconque des revendications précédentes, dont le cadre est de forme parallélépipédique, d'une longueur (L) de 30 à 100 cm, d'une largeur de 0,3 à 0,8 fois la longueur et d'une hauteur entre 3 et 20 cm, de préférence d'une longueur de 55 à 65 cm, d'une largeur (l) de 30 à 45 cm et d'une hauteur (H ou Hn) entre 4 et 8 cm.

8. Système de transport et de pousse de pâtons crus frais comprenant une pluralité de conditionnements empilables (1) selon l'une quelconque des revendications 1 à 7, les hauteurs (H ou Hn) de la pluralité de conditionnements empilables étant identiques ou différentes.

9. Système de transport et de pousse de pâtons crus frais selon la revendication 8 comprenant en outre (i) un ou plusieurs chariots roulants (5) dont la largeur et la longueur sont adaptées à la largeur et la longueur des conditionnements empilables (1) et/ou (ii) un ou plusieurs couvercles (4) dont la largeur et la longueur correspondent à la largeur et la longueur des conditionnements empilables (1).

10. Méthode de transport et de pousse de pâtons crus frais, comprenant les étapes suivantes :
(a) pétrissage de la pâte pour produits de boulangerie et formation de pâtons crus frais,
(b) dépôt des pâtons crus frais sur les supports (3) rigides de conditionnements empilables (1) selon l'une quelconque des revendications 1 à 7,
(c) empilement des conditionnements empilables (1) contenant les pâtons crus frais pour former une pile de conditionnements (6), de préférence sur un chariot roulant (5) dont la largeur et la longueur sont adaptées à la largeur (l) et la longueur (L) des conditionnements empilables (1),
(d) refroidissement de la pile de conditionnements avec les pâtons crus frais à une température de conservation appropriée pour interrompre l'activité de fermentation et stockage à cette température de conservation,
(e) chargement et transport de la pile de conditionnements (6) avec les pâtons levés à la température de conservation vers le point de cuisson et de vente, et
(f) déchargement de la pile de conditionnements (6) avec les pâtons levés frais au point de cuisson et de vente et le cas échéant suite du stockage à la température de conservation.

11. Méthode de fabrication de produits de boulangerie frais comprenant les étapes suivantes :
(a) pétrissage de la pâte pour produits de boulangerie et formation de pâtons crus frais,
(b) dépôt des pâtons crus frais sur les supports (3) rigides de conditionnements empilables (1) selon l'une quelconque des revendications 1 à 7,
(c) empilement des conditionnements empilables (1) contenant les pâtons crus frais pour former une pile de conditionnements (6), de préférence sur un chariot roulant (5) dont la largeur et la longueur sont adaptées à la largeur (l) et la longueur (L) des conditionnements empilables (1),
(d) refroidissement de la pile de conditionnements avec les pâtons crus frais à une température de conservation appropriée pour interrompre l'activité de fermentation et stockage à cette température de conservation,
(e) chargement et transport de la pile de conditionnements (6) avec les pâtons crus frais à la température de conservation vers un point de cuisson et de vente, et
(f) déchargement de la pile de conditionnements (6) avec les pâtons crus frais au point de cuisson et de vente et le cas échéant suite du stockage à la température de conservation, et
(g) sortie des pâtons crus frais des conditionnements empilables (1), suivie de la cuisson des pâtons à une température et pendant une durée de cuisson appropriées.

12. Méthode selon l'une des revendications 10 ou 11, dans laquelle la température de conservation se situe entre 2 et 10 °C, de préférence entre 3 et 7 °C.

13. Méthode selon l'une des revendications 10 à 12, dans laquelle (i) les pâtons sont scarifiés avant d'être déposés sur les supports rigides à l'étape (b) ou pendant l'étape (g) avant la cuisson, et/ou (ii) les pâtons sont mis à température ambiante à l'intérieur des conditionnements empilables après l'étape (f) ou après leur sortie des conditionnements empilables pendant l'étape (g) avant la cuisson.

14. Méthode selon l'une des revendications 10 à 13, dans laquelle les conditionnements empilables comprenant les pâtons sont mis dans une chambre de pousse avant l'étape (g).

15. Utilisation de conditionnements empilables selon l'une quelconque des revendications 1 à 7 ou d'un système de transport et de pousse de pâtons levés frais selon l'une quelconque des revendications 8 ou 9 dans une méthode de de transport et de pousse de pâtons crus frais ou de fabrication de produits de boulangerie frais.

## Patentansprüche

1. Stapelbare Verpackung (1) zum Transportieren und Garen von frischen rohen aufgegangenen Teiglingen, die weder tiefgefroren noch (vor-)gebacken sind, umfassend
• einen Rahmen (2) aus starrem Kunststoff, wobei der Rahmen Folgendes aufweist:
∘ umlaufende Seitenteile, wobei jedes umlaufende Seitenteil eine innere Fläche, eine äußere Fläche, eine untere Fläche und eine obere Fläche umfasst, wobei jede untere bzw. obere Fläche ausgebildet ist, um mit einer oberen bzw. unteren Fläche einer identischen stapelbaren Transportverpackung verbunden zu werden,
∘ mindestens zwei gegenüberliegende Seitenteile, die einen oder mehrere Luftdurchlässe (22) aufweisen, wobei der Gesamtquerschnitt der Luftdurchlässe pro Seitenteil zwischen 2 und 12 %, vorzugsweise zwischen 2,5 und 8 %, der Außenfläche des Seitenteils beträgt, und
• einen starren Träger (3) aus rostfreiem Stahl, der im Inneren des Rahmens angeordnet ist, wobei der Träger mindestens zwei abgekantete gegenüberliegende seitliche Ränder (31) umfasst, wobei die abgekanteten gegenüberliegenden Ränder an inneren Flächen von gegenüberliegenden umlaufenden Seitenteilen des Rahmens (2) gehalten werden.

2. Stapelbare Verpackung (1) zum Transportieren und Garen von frischen aufgegangenen Teiglingen nach Anspruch 1, wobei die abgekanteten Ränder (31) des Trägers (3) durch Verkeilung, durch Einrastung durch Befestigung mittels Klebstoff, Nieten, Schrauben, Bolzen oder eine Kombination aus diesen an inneren Flächen von umlaufenden Seitenteilen gehalten werden.

3. Stapelbare Verpackung (1) zum Transportieren und Garen von frischen aufgegangenen Teiglingen nach Anspruch 1 oder 2, wobei der starre Kunststoff, der den Rahmen bildet, Polymere oder Copolymere von Ethylen oder von Propylen enthält, vorzugsweise von Polyethylen hoher Dichte.

4. Stapelbare Verpackung (1) zum Transportieren und Garen von frischen aufgegangenen Teiglingen nach einem der vorhergehenden Ansprüche, wobei die Höhe H oder Hn der umlaufenden Seitenteile des Rahmens das 1,1- bis 5-Fache, vorzugsweise das 1,2- bis 2-Fache, der Höhe eines entsprechenden aufgegangenen Teiglings darstellt.

5. Stapelbare Verpackung (1) zum Transportieren und Garen von frischen aufgegangenen Teiglingen nach einem der vorhergehenden Ansprüche, wobei der starre Träger aus rostfreiem Stahl durchgehende Bohrungen umfasst, so dass der Durchlass von Luft und/oder von Feuchtigkeit zwischen übereinander liegenden stapelbaren Verpackungen (1) gestattet wird.

6. Stapelbare Verpackung (1) zum Transportieren und Garen von frischen aufgegangenen Teiglingen nach einem der vorhergehenden Ansprüche, wobei der Träger tiefgezogene Teile oder Wellen (32) umfasst, vorzugsweise längsgerichtete Wellen (32) für lange Brotteiglinge wie Baguette.

7. Stapelbare Verpackung (1) zum Transportieren und Garen von frischen aufgegangenen Teiglingen nach einem der vorhergehenden Ansprüche, wobei der Rahmen eine Quaderform aufweist mit einer Länge (L) von 30 bis 100 cm, mit einer Breite des 0,3- bis 0,8-Fachen der Länge und einer Höhe zwischen 3 und 20 cm, vorzugsweise mit einer Länge (L) von 55 bis 65 cm, mit einer Breite (I) von 30 bis 45 cm und einer Höhe (H oder Hn) zwischen 4 und 8 cm.

8. System zum Transportieren und Garen von frischen rohen Teiglingen umfassend eine Mehrzahl von stapelbaren Verpackungen (1) nach einem der Ansprüche 1 bis 7 wobei die Höhen (H oder Hn) der Mehrzahl von stapelbaren Verpackungen identisch oder verschieden sind.

9. System zum Transportieren und Garen von frischen rohen Teiglingen nach Anspruch 8, ferner umfassend (i) einen oder mehrere Rollwagen (5), dessen/deren Breite und Länge an die Breite und die Länge der stapelbaren Verpackungen (1) angepasst sind, und/oder (ii) ein oder mehrere Deckel (4), dessen/deren Breite und Länge der Breite und der Länge der stapelbaren Verpackungen (1) entsprechen.

10. Verfahren zum Transportieren und Garen von frischen rohen Teiglingen, umfassend die folgenden Schritte:
(a) Kneten des Teiges für Backwaren und Bilden von frischen rohen Teiglingen,
(b) Ablegen der frischen rohen Teiglinge auf den starren Trägern (3) von stapelbaren Verpackungen (1) nach einem der Ansprüche 1 bis 7,
(c) Stapeln der stapelbaren Verpackungen (1), welche die frischen rohen Teiglinge enthalten, um einen Stapel aus Verpackungen (6) zu bilden, vorzugsweise auf einem Rollwagen (5), dessen Breite und Länge an die Breite (I) und die Länge (L) der stapelbaren Verpackungen (1) angepasst sind,
(d) Abkühlen des Stapels aus Verpackungen mit den frischen rohen Teiglingen auf eine Konservierungstemperatur, die zum Unterbrechen der Gäraktivität geeignet ist, und Lagern bei dieser Konservierungstemperatur,
(e) Verladen und Transportieren des Stapels aus Verpackungen (6) mit den aufgegangenen Teiglingen bei der Konservierungstemperatur zu der Back- und Verkaufsstelle, und
(f) Abladen des Stapels aus Verpackungen (6) mit den frischen aufgegangenen Teiglingen an der Back- und Verkaufsstelle, gegebenenfalls gefolgt von dem Lagern bei der Konservierungstemperatur.

11. Verfahren zum Herstellen von frischen Backwaren, umfassend die folgenden Schritte:
(a) Kneten des Teiges für Backwaren und Bilden von frischen rohen Teiglingen,
(b) Ablegen der frischen rohen Teiglinge auf den starren Trägern (3) von stapelbaren Verpackungen (1) nach einem der Ansprüche 1 bis 7,
(c) Stapeln der stapelbaren Verpackungen (1), welche die frischen rohen Teiglinge enthalten, um einen Stapel aus Verpackungen (6) zu bilden, vorzugsweise auf einem Rollwagen (5), dessen Breite und Länge an die Breite (I) und die Länge (L) der stapelbaren Verpackungen (1) angepasst sind,
(d) Abkühlen des Stapels aus Verpackungen mit den frischen rohen Teiglingen auf eine Konservierungstemperatur, die zum Unterbrechen der Gäraktivität geeignet ist, und Lagern bei dieser Konservierungstemperatur,
(e) Verladen und Transportieren des Stapels aus Verpackungen (6) mit den frischen rohen Teiglingen bei der Konservierungstemperatur zu einer Back- und Verkaufsstelle, und
(f) Abladen des Stapels aus Verpackungen (6) mit den frischen rohen Teiglingen an der Back- und Verkaufsstelle, gegebenenfalls gefolgt von dem Lagern bei der Konservierungstemperatur, und
(g) Herausnehmen der frischen rohen Teiglinge aus den stapelbaren Verpackungen (1), gefolgt von dem Backen der Teiglinge bei einer geeigneten Backtemperatur und über eine geeignete Backdauer.

12. Verfahren nach einem der Ansprüche 10 oder 11, bei dem die Konservierungstemperatur zwischen 2 und 10 °C beträgt, vorzugsweise zwischen 3 und 7 °C.

13. Verfahren nach einem der Ansprüche 10 bis 12, bei dem (i) die Teiglinge, bevor sie in Schritt (b) auf den starren Trägern abgelegt werden, oder während des Schrittes (g) vor dem Backen eingeritzt werden, und/oder (ii) die Teiglinge im Inneren der stapelbaren Verpackungen nach dem Schritt (f) oder nach ihrem Herausnehmen aus den stapelbaren Verpackungen während des Schritts (g) vor dem Backen auf Umgebungstemperatur gebracht werden.

14. Verfahren nach einem der Ansprüche 10 bis 13, bei dem die stapelbaren Verpackungen, welche die Teiglinge enthalten, vor dem Schritt (g) in eine Garkammer verbracht werden.

15. Verwendung von stapelbaren Verpackungen nach einem der Ansprüche 1 bis 7 oder eines Systems zum Transportieren und Garen von frischen aufgegangenen Teiglingen nach einem der Ansprüche 8 oder 9 in einem Verfahren zum Transportieren und Garen von frischen rohen Teiglingen oder zum Herstellen von frischen Backwaren.

## Claims

1. A stackable packaging unit (1) for transporting and proving fresh unbaked risen dough portions which are neither deep-frozen or precooked, comprising
• a frame (2) of rigid plastics material, the frame comprising
∘ peripheral side walls, each peripheral side wall comprising an inner face, an outer face, a lower face and an upper face, each lower or upper face respectively being configured to fit together with an upper or lower face respectively of an identical stackable transport packaging unit,
∘ at least two opposing side walls which have one or more air passages (22), the total cross-section of the air passages per side wall being between 2 and 12%, preferably between 2.5 and 8%, of the outer surface area of said side wall, and
• a rigid stainless steel support (3) arranged inside the frame, the support comprising at least two opposing folded lateral edges (31), the opposing folded edges being held in position on inner faces of opposing peripheral side walls of the frame (2).

2. A stackable packaging unit (1) for transporting and proving fresh risen dough portions according to claim 1, in which the folded edges (31) of the support (3) are held in position on the inner faces of peripheral side walls by wedging, by snap fastening, by fastening by means of adhesive, rivets, screws, nuts or a combination thereof.

3. A stackable packaging unit (1) for transporting and proving fresh risen dough portions according to claim 1 or claim 2, in which the rigid plastics material forming the frame comprises polymers or copolymers of ethylene or propylene, preferably high density polyethylene.

4. A stackable packaging unit (1) for transporting and proving fresh risen dough portions according to any one of the preceding claims, in which the height H or Hn of the peripheral side walls of the frame amounts to from 1.1 to 5, preferably 1.2 to 2 times the height of a corresponding risen dough portion.

5. A stackable packaging unit (1) for transporting and proving fresh risen dough portions according to any one of the preceding claims, in which the rigid stainless steel support comprises perforations so as to allow air and/or moisture to pass between superposed stackable packaging units (1).

6. A stackable packaging unit (1) for transporting and proving fresh risen dough portions according to any one of the preceding claims, in which the support comprises pressed parts or undulations (32), preferably lengthwise undulations (32) for dough portions for long breads, such as baguettes.

7. A stackable packaging unit (1) for transporting and proving fresh risen dough portions according to any one of the preceding claims, the frame of which is parallelepipedal, of a length (L) of 30 to 100 cm, a width of 0.3 to 0.8 times the length and a height of between 3 and 20 cm, preferably a length of 55 to 65 cm, a width (I) of 30 to 45 cm and a height (H or Hn) of between 4 and 8 cm.

8. A system for transporting and proving fresh unbaked dough portions comprising a plurality of stackable packaging units (1) according to any one of claims 1 to 7, the heights (H or Hn) of the plurality of stackable packaging units being identical or different.

9. A system for transporting and proving fresh unbaked dough portions according to claim 8 furthermore comprising (i) one or more mobile trolleys (5), the width and length of which are adapted to the width and length of the stackable packaging units (1) and/or (ii) one or more lids (4), the width and length of which correspond to the width and length of the stackable packaging units (1).

10. A method for transporting and proving fresh unbaked dough portions, comprising the following steps:
(a) kneading the dough for bakery products and shaping fresh unbaked dough portions,
(b) placing fresh unbaked dough portions on the rigid supports (3) of stackable packaging units (1) according to any one of claims 1 to 7,
(c) stacking stackable packaging units (1) containing the fresh unbaked dough portions to form a stack of packaging units (6), preferably on a mobile trolley (5), the width and length of which are adapted to the width (I) and length (L) of the stackable packaging units (1),
(d) chilling the stack of packaging units with the fresh unbaked dough portions to a preservation temperature appropriate for suspending fermentation activity and storing at this preservation temperature,
(e) loading and transporting the stack of packaging units (6) with the risen dough portions to the baking and sales location at the preservation temperature, and
(f) unloading the stack of packaging units (6) with the fresh risen dough portions at the baking and sales location and, if needs be, continuing storage at the preservation temperature.

11. A method for manufacturing fresh bakery products comprising the following steps:
(a) kneading the dough for bakery products and shaping fresh unbaked dough portions,
(b) placing fresh unbaked dough portions on the rigid supports (3) of stackable packaging units (1) according to any one of claims 1 to 7,
(c) stacking stackable packaging units (1) containing the fresh unbaked dough portions to form a stack of packaging units (6), preferably on a mobile trolley (5), the width and length of which are adapted to the width (I) and length (L) of the stackable packaging units (1),
(d) chilling the stack of packaging units with the fresh unbaked dough portions to a preservation temperature appropriate for suspending fermentation activity and storing at this preservation temperature,
(e) loading and transporting the stack of packaging units (6) with the fresh unbaked dough portions to a baking and sales location at the preservation temperature, and
(f) unloading the stack of packaging units (6) with the fresh unbaked dough portions at the baking and sales location and, if needs be, continuing storage at the preservation temperature, and
(g) removing the fresh unbaked dough portions from the stackable packaging units (1), followed by baking of the dough portions at an appropriate baking temperature for an appropriate baking time.

12. A method according to either claim 10 or claim 11, in which the preservation temperature is between 2 and 10°C, preferably between 3 and 7°C.

13. A method according to one of claims 10 to 12, in which (i) the dough portions are slashed before being placed on the rigid supports in step (b) or during step (g) before baking, and/or (ii) the dough portions are brought to ambient temperature inside the stackable packaging units after step (f) or after their removal from the stackable packaging units during step (g) before baking.

14. A method according to one of claims 10 to 13, in which the stackable packaging units comprising the dough portions are placed in a proving chamber before step (g).

15. Use of stackable packaging units according to any one of claims 1 to 7 or of a transport and proving system for fresh risen dough portions according to either one of claims 8 or 9 in a method for transporting and proving fresh unbaked dough portions or for manufacturing fresh bakery products.
